# EUROPEAN PATENT APPLICATION

(11) **EP 4 679 250 A1**
(43) Date of publication of application: **14.01.2026**
(21) Application number: 24774084.8
(22) Date of filing: 18.03.2024
(51) Int. Cl.: G06F 3/06

(54) **SHUFFLE DATA STORAGE METHOD AND APPARATUS AND STORAGE MEDIUM**

(30) Priority: 23.03.2023 CN 202310321360
(71) Applicant: HUAWEI TECHNOLOGIES CO., LTD., Shenzhen, Guangdong 518129 (CN)
(72) Inventor: LIU, Wei, Shenzhen, Guangdong 518129 (CN); BAO, Xiaoming, Shenzhen, Guangdong 518129 (CN); LIU, Chun, Shenzhen, Guangdong 518129 (CN); XU, Hua, Shenzhen, Guangdong 518129 (CN); ZHU, Ce, Shenzhen, Guangdong 518129 (CN)
(74) Representative: Gill Jennings & Every LLP
(86) International application number: PCT/CN2024/082296
(87) International publication number: WO 2024/193519

(57) **Abstract**

Embodiments of this application disclose a shuffle data storage method and apparatus, and a storage medium, and belong to the field of storage technologies. The method includes: An execution unit stores first shuffle data into at least one remote shuffle service RSS node according to a first load balancing strategy; the execution unit obtains an extended RSS node of a first RSS node; and the execution unit updates the first load balancing strategy to obtain a second load balancing strategy, to store second shuffle data according to the second load balancing strategy. Therefore, in a running process of a target application, the execution unit may obtain an extended RSS node for an RSS node, to update a load balancing strategy, so as to avoid storing shuffle data according to a same load balancing strategy in the entire running process of the target application. This can avoid excessively high load pressure of a single RSS node.

## Description

This application claims priority to Chinese Patent Application No. 202310321360.0, filed with the China National Intellectual Property Administration on March 23, 2023 and entitled "SHUFFLE DATA STORAGE METHOD AND APPARATUS, AND STORAGE MEDIUM", which is incorporated herein by reference in its entirety.

### TECHNICAL FIELD

Embodiments of this application relate to the field of storage technologies, and in particular, to a shuffle data storage method and apparatus, and a storage medium.

### BACKGROUND

In a MapReduce (MapReduce) system, data processing includes three processes: a map (map) process, a shuffle (shuffle) process, and a reduce (reduce) process. The map process is used to convert original data into key-value pairs to obtain shuffle data, the shuffle process is used to cache the shuffle data, and the reduce process is used to obtain and process the shuffle data. How to store the shuffle data is a hot topic in current research.

In a related technology, when an application is run in a MapReduce system, an execution unit (executor) in the system executes a task in a map process to obtain shuffle data, and stores the shuffle data into at least one remote shuffle service (remote shuffle service, RSS) node in a plurality of RSS nodes according to a preset load balancing strategy. The preset load balancing strategy is configured when the application is registered in the system.

After the shuffle data is stored in the foregoing manner, load balancing between different RSS nodes is poor, and consequently, storage performance of each RSS node cannot be fully utilized.

### SUMMARY

Embodiments of this application provide a shuffle data storage method and apparatus, and a storage medium, to improve load balancing between different RSS nodes, so as to fully utilize storage performance of each RSS node. The technical solutions are as follows.

According to a first aspect, a shuffle data storage method is provided. In the method, an execution unit stores first shuffle data into at least one remote shuffle service RSS node according to a first load balancing strategy, where the first shuffle data is shuffle data generated when a target application is executed at a current time, and the at least one RSS node includes a first RSS node; the execution unit obtains an extended RSS node of the first RSS node; the execution unit updates the first load balancing strategy based on the extended RSS node of the first RSS node, to obtain a second load balancing strategy; and the execution unit stores second shuffle data according to the second load balancing strategy, where the second shuffle data is shuffle data generated when the target application is executed after the current time.

In embodiments of this application, in a running process of the target application, the execution unit may obtain an extended RSS node for an RSS node, to update a load balancing strategy, so as to avoid storing shuffle data according to a same load balancing strategy in the entire running process of the target application. This can avoid excessively high load pressure of a single RSS node.

Optionally, the first shuffle data is shuffle data generated when the execution unit executes a first map task at a target stage of the target application, and the target stage is any stage of a plurality of stages corresponding to the target application; and the second shuffle data is shuffle data generated when the execution unit executes a second map task at the target stage of the target application, and the second map task is a map task executed after the first map task.

Considering that the running process of the target application usually includes a plurality of stages, and each stage usually includes a large quantity of map tasks, an RSS node may be further extended after a map task at a stage of the target application to update the first load balancing strategy, so that an updated load balancing strategy is used in a next map task. This avoids overload of a single RSS node.

Optionally, in the method, the execution unit may further obtain a load balancing strategy set, where the load balancing strategy set includes a plurality of load balancing strategies that are in a one-to-one correspondence with the plurality of stages, and the first load balancing strategy is a load balancing strategy that is in the load balancing strategy set and that corresponds to the target stage; and the execution unit stores the load balancing strategy set.

To improve load balancing effect, different load balancing strategies may be further preconfigured for different stages of the target application, so that data is stored according to a preconfigured load balancing strategy in an initial phase of any stage, and an RSS node may be extended in a later phase of the stage to update a corresponding load balancing strategy.

Optionally, an implementation in which the execution unit obtains the load balancing strategy set may be: The execution unit receives the load balancing strategy set from a drive unit.

In embodiments of this application, when the drive unit registers the target application, a load balancing strategy corresponding to each stage may be configured for the target application, to obtain the load balancing strategy set.

Optionally, an implementation in which the execution unit stores the first shuffle data into the at least one remote shuffle service RSS node according to the first load balancing strategy may be: The execution unit sends a data write request message to the first RSS node, where the data write request message indicates to store a part of data in the first shuffle data into the first RSS node.

Correspondingly, an implementation in which the execution unit obtains the extended RSS node of the first RSS node may be: The execution unit receives a data write response message from the first RSS node, where the data write response message carries an identifier of the extended RSS node.

To be specific, when the first RSS node receives the data write request message from the execution unit, after the first RSS node stores the shuffle data, the first RSS node further checks whether the extended RSS node is configured for the first RSS node. If the extended RSS node is configured, the first RSS node returns, to the execution unit, the data write response message carrying the identifier of the extended RSS node, to notify the execution unit that currently the first RSS node is overloaded, and subsequent shuffle data may be stored into the extended RSS node.

According to a second aspect, a shuffle data storage method is provided. In the method, in a process in which an execution unit stores first shuffle data into at least one remote shuffle service RSS node according to a first load balancing strategy, a management node determines, in response to load pressure of a first RSS node in the at least one RSS node, a second RSS node from a plurality of RSS nodes as an extended RSS node of the first RSS node, so that the execution unit stores second shuffle data according to a second load balancing strategy. The first shuffle data is shuffle data generated when the execution unit executes a target application at a current time, the second shuffle data is shuffle data generated when the execution unit executes the target application after the current time, and the second load balancing strategy is obtained by updating the first load balancing strategy based on the second RSS node.

In embodiments of this application, when the execution unit stores shuffle data generated in the running process of the target application, the management node may determine an extended RSS node for an RSS node in response to load pressure of the RSS node in an initial load balancing strategy, to avoid storing shuffle data according to a same load balancing strategy in the entire running process of the target application. This can avoid excessively high load pressure of a single RSS node.

Optionally, an implementation in which the management node determines, in response to the load pressure of the first RSS node in the at least one RSS node, the second RSS node from the plurality of RSS nodes as the extended RSS node of the first RSS node may be: When the management node receives a node extension request message from the first RSS node, the management node performs an operation of determining the second RSS node from the plurality of RSS nodes, where the node extension request message indicates that a total amount of shuffle data stored in the first RSS node exceeds a reference threshold.

Correspondingly, in the method, the management node further returns a node extension response message to the first RSS node, where the node extension response message carries an identifier of the second RSS node.

When the total amount of the shuffle data stored in the first RSS node exceeds the reference threshold, it indicates that remaining storage space of the first RSS node is small. In this case, if a large amount of shuffle data is stored into the first RSS node, it is likely that the first RSS node is overloaded. Therefore, in this scenario, the first RSS node may send the node extension request message to the management node, to avoid overload of the first RSS node.

Optionally, an implementation in which the management node determines the second RSS node from the plurality of RSS nodes as the extended RSS node of the first RSS node may be: The management node obtains a weight of each RSS node of the plurality of RSS nodes, where the weight indicates a magnitude of load pressure of a corresponding RSS node; and the management node determines the second RSS node from the plurality of RSS nodes based on the weight of each RSS node of the plurality of RSS nodes.

By using the weight, the management node can select an RSS node with light load as the extension node.

Optionally, before obtaining the weight of each RSS node of the plurality of RSS nodes, the management node may further receive load status data from each RSS node of the plurality of RSS nodes, where the load status data indicates a load status of a corresponding RSS node; and the management node determines the weight of each RSS node of the plurality of RSS nodes based on the load status data of each RSS node of the plurality of RSS nodes.

The management node can determine the weight of each RSS node by reporting the load status data of each RSS node.

Optionally, the first shuffle data is shuffle data generated when the execution unit executes a first map task at a target stage of the target application, and the target stage is any stage of a plurality of stages corresponding to the target application; and the second shuffle data is shuffle data generated when the execution unit executes a second map task at the target stage of the target application, and the second map task is a map task executed after the first map task.

Considering that the running process of the target application usually includes a plurality of stages, and each stage usually includes a large quantity of map tasks, an RSS node may be further extended after a map task at a stage of the target application to update the first load balancing strategy, so that an updated load balancing strategy is used in a next map task. This avoids overload of a single RSS node.

Optionally, the management node may further determine a load balancing strategy set, where the load balancing strategy set includes a plurality of load balancing strategies that are in a one-to-one correspondence with the plurality of stages of the target application, and the first load balancing strategy is a load balancing strategy that is in the load balancing strategy set and that corresponds to the target stage.

To improve load balancing effect, different load balancing strategies may be further preconfigured for different stages of the target application, so that data is stored according to a preconfigured load balancing strategy in an initial phase of any stage, and an RSS node may be extended in a later phase of the stage to update a corresponding load balancing strategy.

Optionally, an implementation in which the management node determines the load balancing strategy set may be: When the management node receives an application registration request from a drive unit, the management node performs an operation of determining the load balancing strategy set, where the application registration request carries an identifier of the target application. Correspondingly, in the method, the management node may further return the load balancing strategy set to the drive unit.

In embodiments of this application, when the target application is registered by the drive unit, the management node configures, for the target application, a load balancing strategy corresponding to each stage, to obtain the load balancing strategy set.

Optionally, an implementation in which the management node determines the load balancing strategy set may be: The management node determines an estimated shuffle data amount at each stage of the plurality of stages; and the management node determines the load balancing strategy set based on the estimated shuffle data amount at each stage of the plurality of stages and the weight of each RSS node of the plurality of RSS nodes, where there is a positive correlation between the estimated shuffle amount at each stage and a quantity of RSS node identifiers included in a load balancing strategy corresponding to each stage.

There is the positive correlation between the estimated shuffle amount at each stage and the quantity of RSS node identifiers included in the load balancing strategy corresponding to each stage. In this setting manner, if an estimated shuffle amount at a stage is small, a quantity of RSS node identifiers in a load balancing strategy configured for the stage is correspondingly small, so that shuffle data in each partition at the stage is centrally distributed on a small quantity of RSS nodes, to avoid excessively scattered distribution of shuffle data of partitions with small data amounts. This can reduce subsequent link establishment overheads and small-data cross-node access overheads.

Optionally, an implementation in which the management node determines the estimated shuffle data amount at each stage of the plurality of stages may be: The management node queries a shuffle data history record corresponding to the target application; and if the management node finds the shuffle data history record, the management node determines the estimated shuffle data amount at each stage of the plurality of stages based on the shuffle data history record.

**In** embodiments of this application, the estimated shuffle data amount at each stage of the plurality of stages may be determined by using the shuffle data history record of the target application. In this way, load balancing effect of the load balancing strategy that is of each stage and that is determined based on the estimated shuffle data amount at each stage of the plurality of stages is clearer.

Optionally, after the management node queries the shuffle data history record corresponding to the target application, if the management node finds no shuffle data history record, the management node obtains a shuffle data sampling result corresponding to the target application; and the management node determines the estimated shuffle data amount at each stage of the plurality of stages based on the shuffle data sampling result.

**In** embodiments of this application, if there is no shuffle data history record for the target application, the estimated shuffle data amount at each stage of the plurality of stages may be further determined in a sampling manner. This increases application scenarios of embodiments of this application.

According to a third aspect, a shuffle data storage method is provided. In the method, a first RSS node receives at least a part of data in first shuffle data that is stored by an execution unit according to a first load balancing strategy, where the first shuffle data is shuffle data generated when the execution unit executes a target application at a current time; and the first RSS node obtains an extended RSS node in response to load pressure of the first RSS node, so that the execution unit stores second shuffle data according to a second load balancing strategy, where the second shuffle data is shuffle data generated when the execution unit executes the target application after the current time, where the second load balancing strategy is obtained by updating the first load balancing strategy based on the extended RSS node.

In embodiments of this application, when the execution unit stores shuffle data generated in a running process of the target application, each RSS node may determine, based on load pressure of the RSS node, whether to obtain an extended RSS node for the RSS node, so that the execution unit can obtain the extended RSS node for the RSS node in the running process of the target application, to update a load balancing strategy, so as to avoid storing shuffle data according to a same load balancing strategy in the entire running process of the target application. This can avoid excessively high load pressure of a single RSS node.

Optionally, an implementation in which the first RSS node obtains the extended RSS node in response to the load pressure of the first RSS node may be: The first RSS node sends a node extension request message to a management node when it is detected through monitoring that a total amount of shuffle data stored in the first RSS node exceeds a reference threshold; and the first RSS node receives a node extension response message from the management node, where the node extension response message carries an identifier of the extended RSS node.

When the total amount of the shuffle data stored in the first RSS node exceeds the reference threshold, it indicates that remaining storage space of the first RSS node is small. In this case, if a large amount of shuffle data is stored into the first RSS node, it is likely that the first RSS node is overloaded. Therefore, in this scenario, the first RSS node may send the node extension request message to the management node, to avoid overload of the first RSS node.

Optionally, an implementation in which the first RSS node receives at least the part of data in the first shuffle data that is stored by the execution unit according to the first load balancing strategy may be: The first RSS node receives a data write request message from the execution unit, where the data write request message indicates to store a part of data in the first shuffle data into the first RSS node. Correspondingly, after the first RSS node obtains the extended RSS node, the first RSS node further sends a data write response message to the execution unit, where the data write response message carries an identifier of the extended RSS node.

To be specific, when the first RSS node receives the data write request message from the execution unit, after the first RSS node stores the shuffle data, the first RSS node further checks whether the extended RSS node is configured for the first RSS node. If the extended RSS node is configured, the first RSS node returns, to the execution unit, the data write response message carrying the identifier of the extended RSS node, to notify the execution unit that currently the first RSS node is overloaded, and subsequent shuffle data may be stored into the extended RSS node.

Optionally, in the method, the first RSS node further periodically reports load status data of the first RSS node to the management node.

Because load on each RSS node is constantly updated, the first RSS node needs to periodically report the load status data of the first RSS node, so that the management node updates a weight of each RSS node in a timely manner, to improve effectiveness of the load balancing strategy.

According to a fourth aspect, a shuffle data storage apparatus is provided. The apparatus has a function of implementing behavior of the shuffle data storage method according to the first aspect. The apparatus includes at least one module, and the at least one module is configured to implement the shuffle data storage method according to the first aspect.

According to a fifth aspect, a shuffle data storage apparatus is provided. The apparatus has a function of implementing behavior of the shuffle data storage method according to the second aspect. The apparatus includes at least one module, and the at least one module is configured to implement the shuffle data storage method according to the second aspect.

According to a sixth aspect, a shuffle data storage apparatus is provided. The apparatus has a function of implementing behavior of the shuffle data storage method according to the third aspect. The apparatus includes at least one module, and the at least one module is configured to implement the shuffle data storage method according to the third aspect.

According to a seventh aspect, a shuffle data storage apparatus is provided. A structure of the apparatus includes a processor and a memory. The memory is configured to store a program that supports the apparatus in performing the shuffle data storage method according to the first aspect, and store data for implementing the shuffle data storage method according to the first aspect. The processor is configured to execute the program stored in the memory.

According to an eighth aspect, a shuffle data storage apparatus is provided. The structure of the apparatus includes a processor and a memory. The memory is configured to store a program that supports the apparatus in performing the shuffle data storage method according to the second aspect, and store data for implementing the shuffle data storage method according to the second aspect. The processor is configured to execute the program stored in the memory.

According to a ninth aspect, a shuffle data storage apparatus is provided. The structure of the apparatus includes a processor and a memory. The memory is configured to store a program that supports the apparatus in performing the shuffle data storage method according to the third aspect, and store data for implementing the shuffle data storage method according to the third aspect. The processor is configured to execute the program stored in the memory.

According to a tenth aspect, a computer-readable storage medium is provided. The computer-readable storage medium stores instructions. When the instructions are run on a computer, the computer is enabled to perform the shuffle data storage method according to the first aspect, or the shuffle data storage method according to the second aspect, or the shuffle data storage method according to the third aspect.

According to an eleventh aspect, a computer program product including instructions is provided. When the computer program product runs on a computer, the computer is enabled to perform the shuffle data storage method according to the first aspect, or the shuffle data storage method according to the second aspect, or the shuffle data storage method according to the third aspect.

Technical effect obtained in the fourth aspect to the eleventh aspect is similar to technical effect obtained through corresponding technical means in the first aspect to the third aspect. Details are not described herein again.

### BRIEF DESCRIPTION OF DRAWINGS

FIG. 1 is a diagram of an architecture of an RSS-based MapReduce system according to an embodiment of this application;
FIG. 2 is a diagram of obtaining a load balancing strategy according to an embodiment of this application;
FIG. 3 is a diagram of a load balancing strategy according to an embodiment of this application;
FIG. 4 is a diagram of another load balancing strategy according to an embodiment of this application;
FIG. 5 is a diagram of an architecture of an RSS-based MapReduce system according to an embodiment of this application;
FIG. 6 is a diagram of a historical data management module of a metadata service node according to an embodiment of this application;
FIG. 7 is a diagram of a load balancing management module of a metadata service node according to an embodiment of this application;
FIG. 8 is a diagram of a load monitoring module of an RSS node according to an embodiment of this application;
FIG. 9 is a diagram of an application load balancing management module of an execution unit node according to an embodiment of this application;
FIG. 10 is a diagram of an interaction process of modules in the system shown in FIG. 5 according to an embodiment of this application;
FIG. 11 is a flowchart of a shuffle data storage method according to an embodiment of this application;
FIG. 12 is a flowchart of another shuffle data storage method according to an embodiment of this application;
FIG. 13 is a flowchart of another shuffle data storage method according to an embodiment of this application;
FIG. 14 is a flowchart of another shuffle data storage method according to an embodiment of this application;
FIG. 15 is a diagram of updating a load balancing strategy according to an embodiment of this application;
FIG. 16 is a diagram of a structure of a shuffle data storage apparatus according to an embodiment of this application;
FIG. 17 is a diagram of a structure of another shuffle data storage apparatus according to an embodiment of this application;
FIG. 18 is a diagram of a structure of another shuffle data storage apparatus according to an embodiment of this application; and
FIG. 19 is a diagram of a structure of a computer device according to an embodiment of this application.

### DESCRIPTION OF EMBODIMENTS

To make objectives, technical solutions, and advantages of embodiments of this application clearer, the following further describes implementations of this application in detail with reference to the accompanying drawings.

It should be understood that "a plurality of" in this specification means two or more. In descriptions of this application, unless otherwise specified, "/" means "or", for example, A/B may mean "A or B"; "and/or" used herein is only used to describe an association relationship between associated objects, and indicates that three relationships may exist. For example, "A and/or B" may indicate the following: Only A exists, both A and B exist, and only B exists. In addition, to clearly describe the technical solutions in embodiments of this application, terms such as "first" and "second" are used in embodiments of this application to distinguish between same items or similar items that have same or similar functions and purposes. A person skilled in the art may understand that the terms such as "first" and "second" do not limit a quantity or an execution sequence, and the terms such as "first" and "second" do not indicate a definite difference.

Before embodiments of this application are described in detail, an application scenario in embodiments of this application is first described.

A MapReduce (MapReduce) system is a big data parallel computing processing architecture, and data processing of the system includes three processes: a map (map) process, a shuffle (shuffle) process, and a reduce (reduce) process. The shuffle process is used to cache key-value pairs (namely, shuffle data) generated in the map process, for use in the subsequent reduce process.

The MapReduce system includes a plurality of computing nodes. After an application is run on the computing node, a plurality of execution units (executors) and a drive unit (driver) are deployed on the computing node for the application. Therefore, it may be understood that the application includes the plurality of execution units and the drive unit. The drive unit is a main () function for running the application, and is used for resource application, information registration, job scheduling, and the like. The execution unit is configured to process tasks in the map process, the shuffle process, or the reduce process. The task in the map process may be referred to as a map task, and the task in the reduce process may be referred to as a reduce task. In some scenarios, after obtaining shuffle data, an execution unit stores the shuffle data into a local disk. In these scenarios, a binding degree of the execution unit and the shuffle data is high, and the execution unit and the shuffle data have a same life cycle, which easily affects stability of a task executed by the execution unit. To solve this problem, an external shuffle service (external shuffle service, ESS) is introduced. The ESS may be understood as starting an agent (agent) on each computing node to manage the shuffle data.

However, the ESS has disadvantages such as a large quantity of network requests, no backup of the shuffle data, and no support for storage-compute decoupling. Therefore, a remote shuffle service (remote shuffle service, RSS) is introduced. The RSS uses independent storage nodes to cache the shuffle data, and decouples computing from storage.

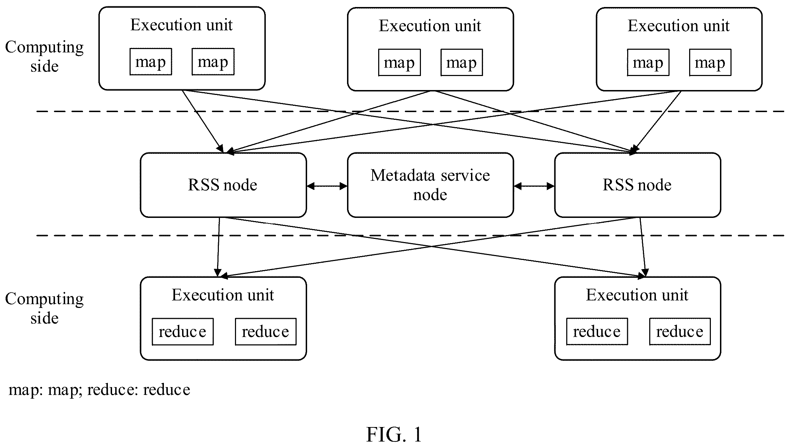

FIG. 1 is a diagram of an architecture of an RSS-based MapReduce system according to an embodiment of this application. As shown in FIG. 1, the MapReduce system includes a plurality of computing nodes located on a computing side, a plurality of RSS nodes, and a metadata service node. A plurality of execution units for an application are deployed on the plurality of computing nodes.

In the architecture shown in FIG. 1, a shuffle data service (shuffle service) is deployed as an independent service on a remote storage node (namely, an RSS node), and the execution unit writes shuffle data to the RSS node after executing a map task. After a map process is complete, the execution unit directly fetches the shuffle data from the RSS node when executing a reduce task.

When storing shuffle data, different execution units write, to a same RSS node, shuffle data that belongs to a same partition (partition) and that is in generated shuffle data, to improve efficiency of executing the reduce task by the execution unit subsequently. A set of data involved in task execution by each execution unit in the application is referred to as a data set of the application, and a key in the shuffle data is data in the data set. Because a size of the data set is usually large, to facilitate subsequent processing, a plurality of partitions are pre-configured based on the size of the data set, and each partition corresponds to a part of data in the data set. After completing the map task based on the data set, the execution unit may place, in a same RSS node, shuffle data whose key (key) corresponds to a same partition subsequently.

In addition, as shown in FIG. 1, in the architecture, there is the lightweight metadata service (meta service) node that plays a role of performing cluster status management and RSS node selection (that is, formulating a load balancing strategy). When a plurality of map tasks are executed in parallel, the role of formulating a load balancing strategy is especially important.

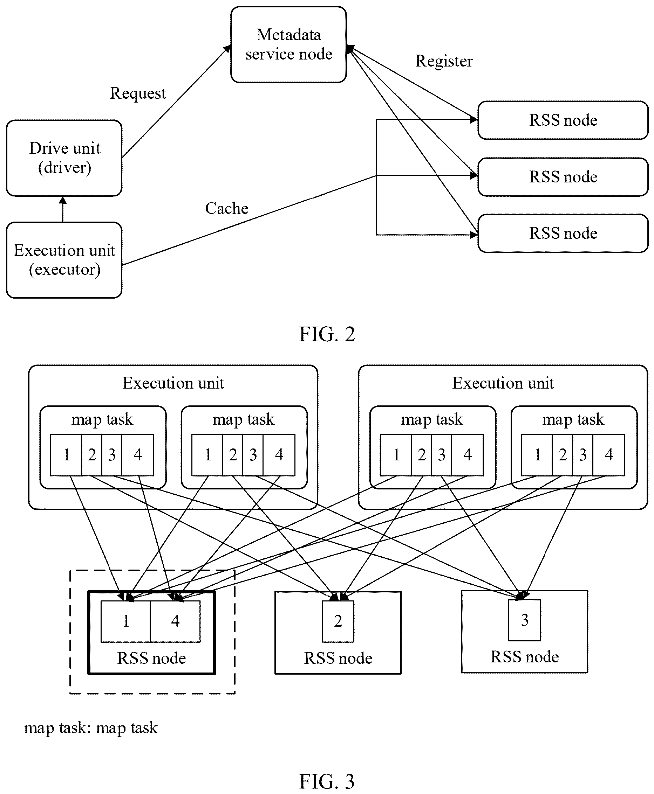

When formulating a load balancing strategy, the metadata service node collects statistics on a shuffle data amount after all the map tasks are complete, and then formulates the load balancing strategy based on the statistics on the shuffle data amount to allocate appropriate RSS nodes. In this case, the map process and the shuffle process cannot be executed in an overlapping manner, inevitably resulting in severe performance deterioration. Currently, in some scenarios, the execution unit writes shuffle data of different partitions to each RSS node in a polling manner, to avoid overload of a single RSS node. In some other scenarios, as shown in FIG. 2, an execution unit first obtains a load balancing strategy via a drive unit (driver). For example, the drive unit sends a request to a metadata service node. After receiving the request, the metadata service node selects a corresponding RSS node for each partition based on resource usage of each RSS node, to obtain the load balancing strategy. Each execution unit subsequently caches shuffle data according to the load balancing strategy in a running process of an application.

However, neither of the foregoing two manners can resolve the following two problems.

FIG. 3 is a diagram of a load balancing strategy according to an embodiment of this application. As shown in FIG. 3, when executing a map task, each execution unit places, in one RSS node, shuffle data that belongs to a partition 1 and shuffle data that belongs to a partition 4, places, in one RSS node, shuffle data that belongs to a partition 2, and places, in one RSS node, shuffle data that belongs to a partition 3.

It can be learned from FIG. 3 that, shuffle data amounts of the partition 1 and the partition 4 are very large. As a result, a plurality of execution units may write a large amount of shuffle data to one first RSS node on the left at the same time, and consequently, the RSS node becomes a performance bottleneck.

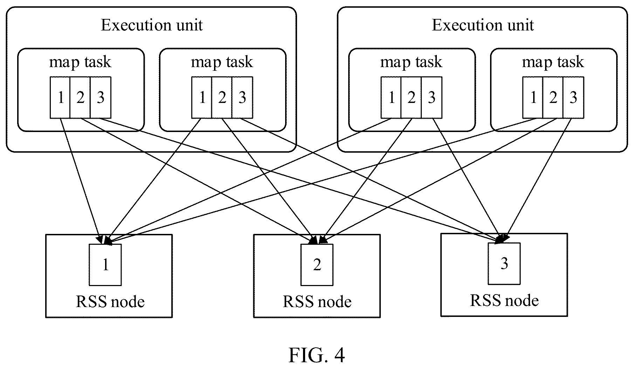

FIG. 4 is a diagram of another load balancing strategy according to an embodiment of this application. As shown in FIG. 4, when executing a map task, each execution unit places, in one RSS node, shuffle data that belongs to a partition 1, places, in one RSS node, shuffle data that belongs to a partition 2, and places, in one RSS node, shuffle data that belongs to a partition 3.

It can be learned from FIG. 4 that, shuffle data amounts of the three partitions are small. As a result, shuffle data is scattered at a remote end, and consequently, high link establishment overheads and small-data cross-node access overheads are generated.

In view of this, embodiments of this application provide a shuffle data storage method. According to the method provided in embodiments of this application, in one aspect, a load balancing strategy can be dynamically adjusted in a running stage of an application, to avoid a problem that a single RSS node is overloaded. In another aspect, a shuffle data amount of the application at different stages can be estimated, and then the load balancing strategy is statically allocated for each stage, to avoid scattered distribution of shuffle data of partitions with small data amounts.

The following describes in detail a MapReduce system, a shuffle data storage method, and a related apparatus provided in embodiments of this application.

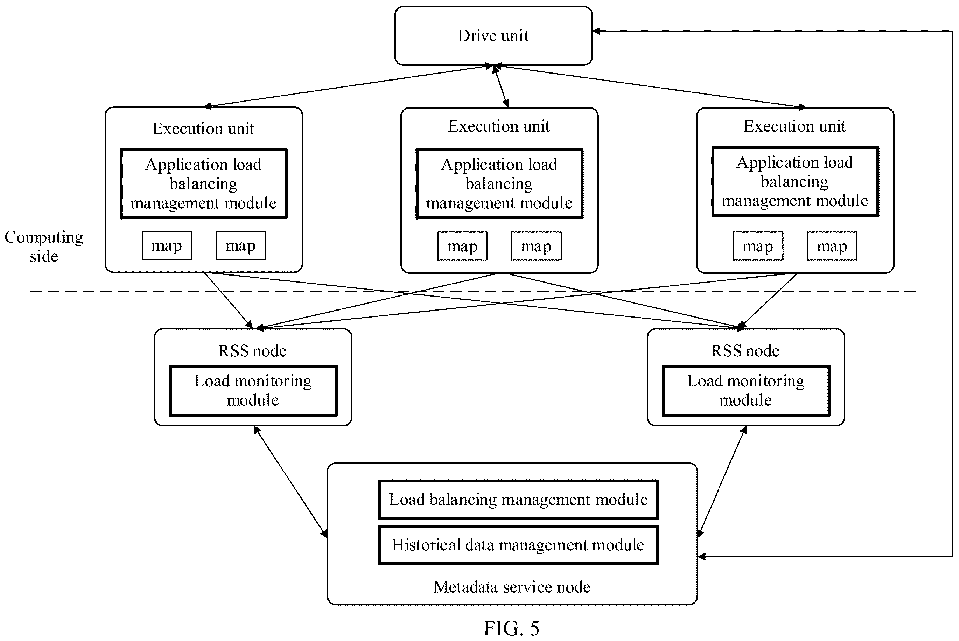

FIG. 5 is a diagram of an architecture of an RSS-based MapReduce system according to an embodiment of this application. As shown in FIG. 5, the system includes a plurality of execution units and one drive unit that are deployed on a computing side and that are for a target application, a plurality of RSS nodes, and one metadata service node. The target application is any application running in the MapReduce system. The plurality of execution units and the one drive unit are deployed on at least one computing node on the computing side. How the execution units and the drive unit are disposed is not limited in embodiments of this application.

Each execution unit and the drive unit are connected in a wireless or wired manner for communication. Each execution unit and any RSS node are connected in a wireless or wired manner for communication. The drive unit and the metadata service node are connected in a wireless or wired manner for communication. The metadata service node is also connected to each RSS node in a wireless or wired manner for communication.

**In** embodiments of this application, the drive unit is used for resource application, information registration, job scheduling, and the like. For example, the drive unit may request a load balancing strategy set for the target application from the metadata service node, where the load balancing strategy set includes a load balancing strategy corresponding to each stage of the target application. The load balancing strategy set is delivered to each execution unit, so that each execution unit stores shuffle data at a corresponding stage according to the load balancing strategy corresponding to each stage of the target application.

**In** addition, in embodiments of this application, in a running process of the target application, a configured load balancing strategy may be further dynamically updated based on a load status on each RSS node.

To implement functions in the foregoing two aspects, some software modules are deployed on the metadata service node, the RSS nodes, and the execution units. The following describes the software modules.

As shown in FIG. 5, the metadata service node includes a historical data management module (history manager) and a load balancing management module (LB manager), the RSS node includes a load monitoring module (LB monitor), and the execution unit includes an application load balancing management module (APP LB manager).

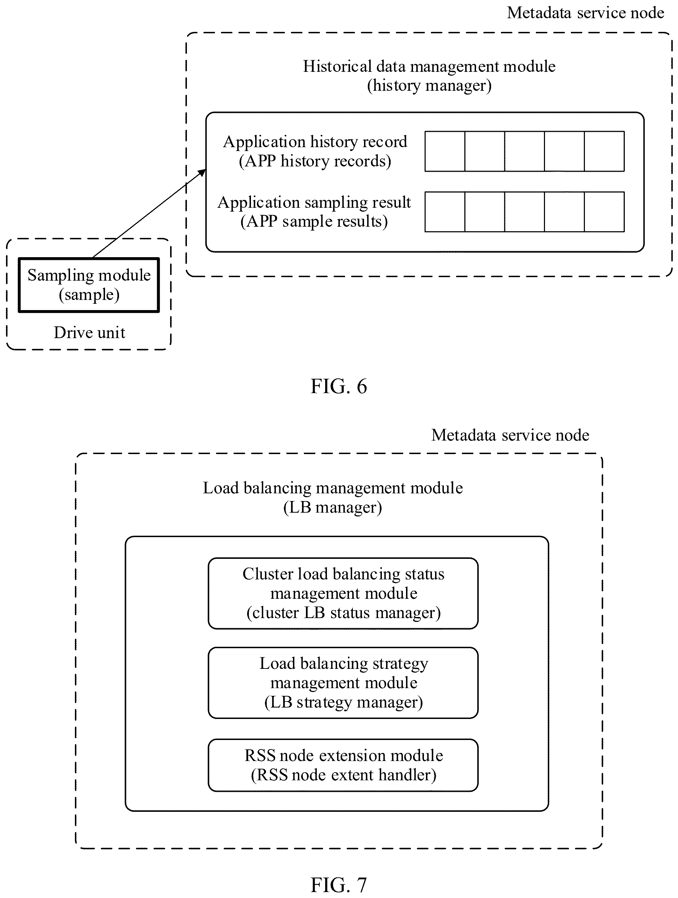

FIG. 6 is a diagram of a historical data management module of a metadata service node according to an embodiment of this application. As shown in FIG. 6, the historical data management module is configured to generate an application history record (APP history records) and an application sampling result (APP sample results) that are corresponding to a target application. The application history record indicates a shuffle data amount at each stage in a historical running process of the target application. The application sampling result indicates a sampling result of the shuffle data amount of the target application at each stage. The application history record is reported by each RSS, and the application sampling result is implemented by a sampling module included in the drive unit. A related implementation is described in detail in subsequent method embodiments.

FIG. 7 is a diagram of a load balancing management module of a metadata service node according to an embodiment of this application. As shown in FIG. 7, the load balancing management module includes a cluster load balancing status management module (cluster LB status manager), a load balancing strategy management module (LB strategy manager), and an RSS node extension module (RSS node extent handler).

The cluster load balancing status management module is configured to configure a weight for each RSS node based on load status data reported by each RSS node. The load balancing strategy management module is configured to: in response to a request of a drive unit, configure a load balancing strategy set (also referred to as an initial load balancing strategy set) for a target application based on records in a historical data management module and the weight of each RSS node. The RSS node extension module is configured to: in response to an extension requirement of an RSS node, extend another RSS node for the RSS node, so that a part or all of shuffle data that originally needs to be stored into the RSS node is subsequently stored into the extended another RSS node. A related implementation is described in detail in subsequent method embodiments.

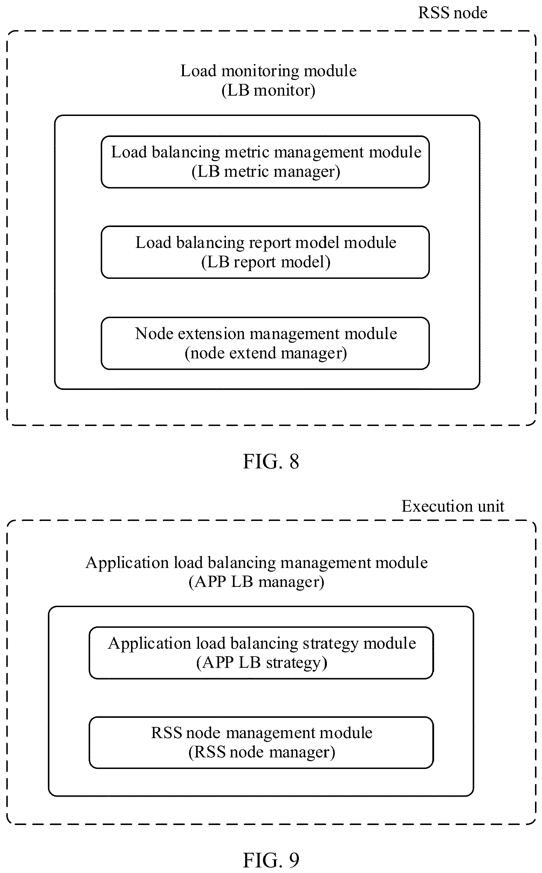

FIG. 8 is a diagram of a load monitoring module of an RSS node according to an embodiment of this application. As shown in FIG. 8, the load monitoring management module includes a load balancing metric management module (LB metric manager), a load balancing report model module (LB report model), and a node extension management module (node extend manager).

The load balancing metric management module is configured to record a distribution status of shuffle data at each stage of all applications currently stored in the RSS node and a total data amount of shuffle data stored in the RSS node. The load balancing report model module is configured to periodically report load status data of the node to a metadata service node. The node extension management module is configured to determine, based on a load status of the node extension management module, whether to request a metadata service node to extend the RSS node, so that an execution unit updates a load balancing strategy based on the extended RSS node. A related implementation is described in detail in subsequent method embodiments.

FIG. 9 is a diagram of an application load balancing management module of an execution unit node according to an embodiment of this application. As shown in FIG. 9, the application load balancing management module includes an application load balancing strategy module (APP LB strategy) and an RSS node management module (RSS node manager).

The application load balancing strategy module is configured to receive a load balancing strategy set from a drive unit, and store shuffle data to each RSS node according to the load balancing strategy set when the shuffle data is written. In addition, the application load balancing strategy module is configured to update a load balancing strategy in the load balancing strategy set based on an extended RSS node obtained from an RSS node, and store the shuffle data to each RSS node according to an updated load balancing strategy. The RSS node management module is configured to register a target application with the extended RSS node. This is because when the target application is just registered, the target application is only registered with each RSS node in the initial load balancing strategy set, and for a newly extended RSS node, the target application needs to be re-registered with the newly extended RSS node. A related implementation is described in detail in subsequent method embodiments.

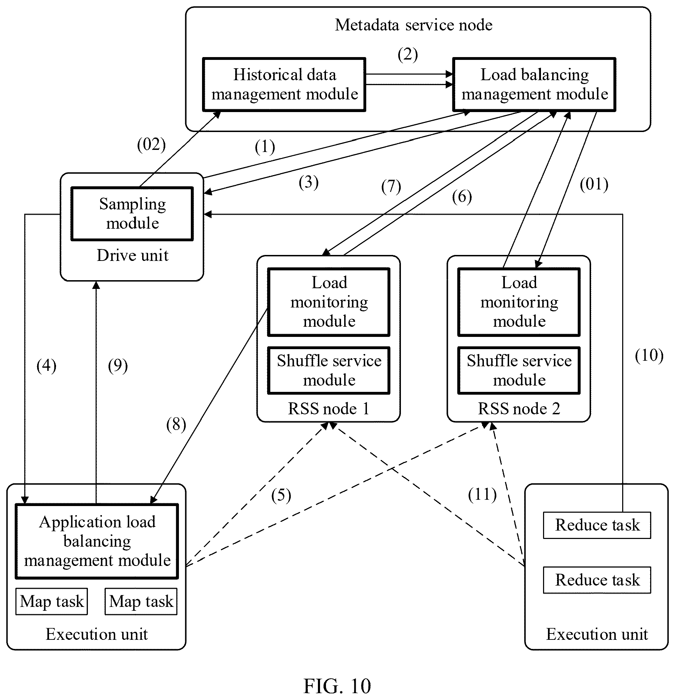

FIG. 10 is a diagram of an interaction process of modules in the system shown in FIG. 5 according to an embodiment of this application. As shown in FIG. 10, the interaction process includes the following steps.

Step (01): The load detection module on an RSS node periodically reports load status data of the RSS node to the load balancing management module of the metadata service node, so that the metadata service node configures a corresponding weight for each RSS node based on load status data of each RSS node.

Step (02) and step (1): The sampling module of the drive unit obtains an application sampling result for a target application, and reports the application sampling result to the historical data management module of the metadata service node. Then, the drive unit requests a load balancing strategy set for the target application from the load balancing management module of the metadata service node.

Step (2) and step (3): The load balancing management module of the metadata service node determines the load balancing strategy set for the target application based on a shuffle data amount that is of the target application at each stage and that is estimated by the historical data management module and a weight of each RSS node, and returns the load balancing strategy set for the target application to the drive unit.

Step (4) and step (5): The drive unit delivers the load balancing strategy set for the target application to the application load balancing management module in each execution unit, so that the application load balancing management module stores, based on the load balancing strategy set, shuffle data in a running process of the target application.

Step (6) and step (7): The RSS node monitors a load status of the RSS node, and when the RSS node is overloaded, the load balancing management module of the metadata service node requests to extend the RSS node, and the load balancing management module returns an RSS node obtained through extension, namely, an extended RSS node, to the RSS node.

Step (8): The RSS node sends, in response to a data write request message of the execution unit, a status of the extended RSS node to the application load balancing management module in the execution unit, so that the application load balancing management module updates a load balancing strategy in the load balancing strategy set.

Step (9): The execution unit sends, to the drive unit, metadata of the shuffle data generated in the running process of the target application, where the metadata of the shuffle data includes a storage location of the shuffle data.

Step (10) and step (11): When executing a reduce task, the execution unit obtains, from the drive unit, the metadata of the shuffle data generated in the running process of the target application, to fetch the shuffle data from each RSS node based on the metadata.

FIG. 5 to FIG. 10 are used as examples to describe an application architecture of embodiments of this application. Optionally, the method provided in embodiments of this application may also be applied to another operation architecture. Examples are not described herein again.

The following explains and describes the method provided in embodiments of this application.

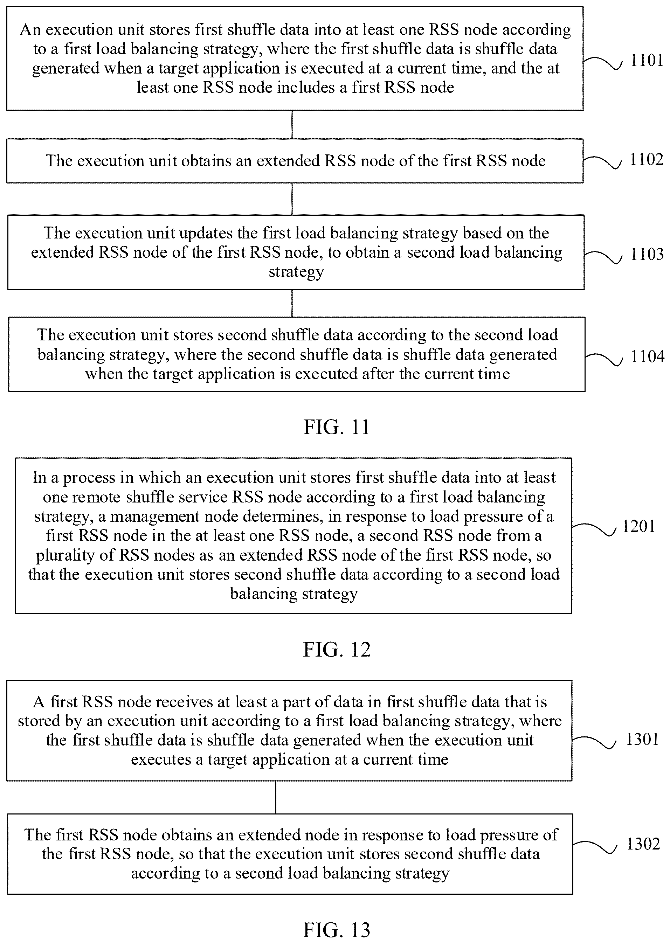

FIG. 11 is a flowchart of a shuffle data storage method according to an embodiment of this application. As shown in FIG. 11, the method includes the following steps.

Step 1101: An execution unit stores first shuffle data into at least one RSS node according to a first load balancing strategy, where the first shuffle data is shuffle data generated when a target application is executed at a current time, and the at least one RSS node includes a first RSS node.

Step 1102: The execution unit obtains an extended RSS node of the first RSS node.

Step 1103: The execution unit updates the first load balancing strategy based on the extended RSS node of the first RSS node, to obtain a second load balancing strategy.

Step 1104: The execution unit stores second shuffle data according to the second load balancing strategy, where the second shuffle data is shuffle data generated when the target application is executed after the current time.

For implementations of the foregoing steps, refer to subsequent embodiments. Details are not described herein.

In embodiments of this application, in a running process of the target application, the execution unit may obtain an extended RSS node for an RSS node, to update a load balancing strategy, so as to avoid storing shuffle data according to a same load balancing strategy in the entire running process of the target application. This can avoid excessively high load pressure of a single RSS node.

FIG. 12 is a flowchart of another shuffle data storage method according to an embodiment of this application. As shown in FIG. 12, the method includes the following steps.

Step 1201: In a process in which an execution unit stores first shuffle data into at least one remote shuffle service RSS node according to a first load balancing strategy, a management node determines, in response to load pressure of a first RSS node in the at least one RSS node, a second RSS node from a plurality of RSS nodes as an extended RSS node of the first RSS node, so that the execution unit stores second shuffle data according to a second load balancing strategy.

The at least one RSS node is an RSS node that is used to store the first shuffle data and that is indicated in the first load strategy. The plurality of RSS nodes are all RSS nodes registered on the management node.

The first shuffle data is shuffle data generated when the execution unit executes a target application at a current time, the second shuffle data is shuffle data generated when the execution unit executes the target application after the current time, and the second load balancing strategy is obtained by updating the first load balancing strategy based on the second RSS node.

For example, the management node is the metadata service node in the system shown in FIG. 5. Optionally, the management node may alternatively be implemented by another node. This is not limited in embodiments of this application.

For implementations of the foregoing steps, refer to subsequent embodiments. Details are not described herein.

In embodiments of this application, when the execution unit stores shuffle data generated in the running process of the target application, the management node may determine an extended RSS node for an RSS node in response to load pressure of the RSS node in an initial load balancing strategy, to avoid storing shuffle data according to a same load balancing strategy in the entire running process of the target application. This can avoid excessively high load pressure of a single RSS node.

FIG. 13 is a flowchart of another shuffle data storage method according to an embodiment of this application. As shown in FIG. 13, the method includes the following steps.

Step 1301: A first RSS node receives at least a part of data in first shuffle data that is stored by an execution unit according to a first load balancing strategy, where the first shuffle data is shuffle data generated when the execution unit executes a target application at a current time.

Step 1302: The first RSS node obtains an extended RSS node in response to load pressure of the first RSS node, so that the execution unit stores second shuffle data according to a second load balancing strategy.

The second shuffle data is shuffle data generated when the execution unit executes the target application after the current time. The second load balancing strategy is obtained by updating the first load balancing strategy based on the extended RSS node.

For implementations of the foregoing steps, refer to subsequent embodiments. Details are not described herein.

In embodiments of this application, when the execution unit stores shuffle data generated in a running process of the target application, each RSS node may determine, based on load pressure of the RSS node, whether to obtain an extended RSS node for the RSS node, so that the execution unit can obtain the extended RSS node for the RSS node in the running process of the target application, to update a load balancing strategy, so as to avoid storing shuffle data according to a same load balancing strategy in the entire running process of the target application. This can avoid excessively high load pressure of a single RSS node.

The following describes the embodiments shown in FIG. 11 to FIG. 13 in detail.

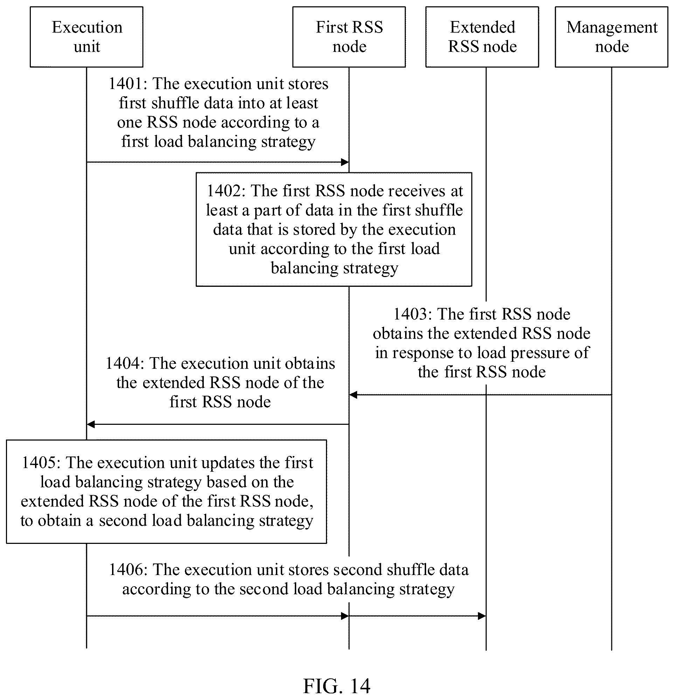

FIG. 14 is a flowchart of a shuffle data storage method according to an embodiment of this application. As shown in FIG. 14, the method includes the following steps.

Step 1401: An execution unit stores first shuffle data into at least one RSS node according to a first load balancing strategy, where the at least one RSS node includes a first RSS node, and the first shuffle data is shuffle data generated when a target application is executed at a current time.

The first load balancing strategy includes at least one RSS node identifier, and the at least one RSS node identifier uniquely identifies the at least one RSS node that stores the first shuffle data. For example, in addition to the at least one RSS node identifier, the first load balancing strategy further includes at least one partition identifier corresponding to each RSS node identifier, and the at least one partition identifier indicates a partition whose shuffle data is stored into a specific RSS node. For example, if a first RSS node identifier in the at least one RSS node identifier corresponds to a first partition identifier, when the execution unit stores the first shuffle data, the execution unit stores shuffle data that belongs to a first partition in the first shuffle data into the first RSS node.

In embodiments of this application, an RSS node may be extended at any moment in a running process of the target application to update the first load balancing strategy, so as to avoid overload of a single RSS node. In this scenario, the first shuffle data may be shuffle data generated at any moment in the running process of the target application.

Further, considering that the running process of the target application usually includes a plurality of stages, and each stage usually includes a large quantity of map tasks, an RSS node may be further extended after a map task at a stage of the target application to update the first load balancing strategy, so that an updated load balancing strategy is used in a next map task. This avoids overload of a single RSS node. In this scenario, the first shuffle data is shuffle data generated when the execution unit executes a first map task at a target stage of the target application, the target stage is any stage of the plurality of stages corresponding to the target application, and the first map task is any map task at the target stage.

In addition, in embodiments of this application, to improve load balancing effect, different load balancing strategies may be further preconfigured for different stages of the target application, so that data is stored according to a preconfigured load balancing strategy in an initial phase of any stage, and an RSS node may be extended in a later phase of the stage to update a corresponding load balancing strategy.

In this scenario, before the target application runs, the execution unit obtains and stores a load balancing strategy set, where the load balancing strategy set includes a plurality of load balancing strategies that are in a one-to-one correspondence with the plurality of stages of the target application. In this case, the first load balancing strategy is a load balancing strategy that is in the load balancing strategy set and that corresponds to the target stage.

In some embodiments, an implementation in which the execution unit obtains the load balancing strategy set may be: The execution unit receives the load balancing strategy set from a drive unit.

For example, when the drive unit performs a registration operation for the target application, the drive unit sends an application registration request to a management node, where the application registration request carries an identifier of the target application. When the management node receives the application registration request from the drive unit, the management node determines the load balancing strategy set for the target application, and returns the determined load balancing strategy set to the drive unit.

In other words, when the target application is registered, the management node configures, for the target application, a load balancing strategy corresponding to each stage, to obtain the load balancing strategy set.

Optionally, in embodiments of this application, the load balancing strategy for the target application may alternatively be obtained in another manner. Examples are not described one by one herein again.

In addition, in some embodiments, an implementation in which the management node determines the load balancing strategy set may be: The management node determines an estimated shuffle data amount at each stage of a plurality of stages of the target application; and the management node determines the load balancing strategy set based on the estimated shuffle data amount at each stage of the plurality of stages and a weight of each RSS node of the plurality of RSS nodes, where there is a positive correlation between the estimated shuffle amount at each stage and a quantity of RSS node identifiers included in a load balancing strategy corresponding to each stage.

The estimated shuffle data amount at each stage may be understood as an amount of shuffle data that may be generated in an actual running process of the stage. In addition, the weight of each RSS node indicates a load size of each RSS node. For example, a larger weight of each RSS node indicates smaller load of the RSS node.

There is the positive correlation between the estimated shuffle amount at each stage and the quantity of RSS node identifiers included in the load balancing strategy corresponding to each stage. In this setting manner, if an estimated shuffle amount at a stage is small, a quantity of RSS node identifiers in a load balancing strategy configured for the stage is correspondingly small, so that shuffle data in each partition at the stage is centrally distributed on a small quantity of RSS nodes, to avoid excessively scattered distribution of shuffle data of partitions with small data amounts. This can reduce subsequent link establishment overheads and small-data cross-node access overheads.

For example, an implementation in which the management node determines the estimated shuffle data amount at each stage of the plurality of stages may be: The management node queries a shuffle data history record corresponding to the target application; and if the management node finds the shuffle data history record, the management node determines the estimated shuffle data amount at each stage of the plurality of stages based on the shuffle data history record.

The application history record shown in FIG. 6 includes shuffle data history records respectively corresponding to a plurality of applications. In view of this, for example, querying the shuffle data history record corresponding to the target application may be implemented by querying the application history record.

For example, the foregoing shuffle data history record includes a historical shuffle data amount corresponding to each stage of the plurality of stages of the target application and a size of a historical data set corresponding to the target application. In view of this, the estimated shuffle data amount at each stage may be determined according to a proportion between a size of a data set corresponding to the target application at the current time and the size of the historical data set corresponding to the target application and based on the historical shuffle data amount corresponding to each stage in the shuffle data history record.

The historical shuffle data amount corresponding to each stage may be understood as a total quantity of historical shuffle data corresponding to the stage. Correspondingly, the determined estimated shuffle data amount at each stage is also the total quantity of estimated shuffle data. Optionally, the historical shuffle data amount corresponding to each stage may include, for example, a historical shuffle data amount in each partition of the plurality of partitions. In this scenario, the determined estimated shuffle data amount at each stage includes an estimated shuffle data amount corresponding to each partition of the plurality of partitions, so that a load balancing strategy is configured more accurately subsequently.

In addition, optionally, in some embodiments, after the management node queries the shuffle data history record corresponding to the target application, if the management node finds no shuffle data history record, the management node may obtain a shuffle data sampling result corresponding to the target application; and the management node determines the estimated shuffle data amount at each stage of the plurality of stages based on the shuffle data sampling result.

The application sampling result shown in FIG. 6 includes shuffle data sampling results respectively corresponding to a plurality of applications. In view of this, for example, querying the shuffle data sampling result corresponding to the target application may be implemented by querying the application sampling result.

For example, the shuffle data sampling result corresponding to the target application may include a sampled shuffle data amount corresponding to each stage. In view of this, the estimated shuffle data amount at each stage may be determined based on the sampled shuffle data amount corresponding to each stage.

The sampled shuffle data amount corresponding to each stage may be understood as a sampling result of a shuffle data amount in a specific quantity of partitions. In view of this, the estimated shuffle data amount corresponding to each stage may be obtained in a manner of scaling the sampled shuffle data amount corresponding to each stage in proportion based on the total quantity of current partitions. A specific proportion of the shuffle data in the partition of the specified proportion may be sampled by inserting an additional operator, to obtain the sampled shuffle data amount.

In addition, a weight of each RSS node of the plurality of RSS nodes is determined by the management node in advance. In some embodiments, an implementation in which the management node determines the weight of each RSS node of the plurality of RSS nodes may be: The management node receives load status data from each RSS node of the plurality of RSS nodes, where the load status data indicates a load status of a corresponding RSS node; and the management node determines the weight of each RSS node of the plurality of RSS nodes based on the load status data of each RSS node of the plurality of RSS nodes.

The management node can determine the weight of each RSS node by reporting the load status data of each RSS node.

For example, the load status data may include memory usage, thread usage, network bandwidth pressure, disk usage, and the like.

In addition, the weight of each RSS node of the plurality of RSS nodes is determined based on the load status data of each RSS node of the plurality of RSS nodes, and for example, may be set by an administrator based on related experience. For example, larger memory usage, thread usage, network bandwidth pressure, or disk usage of an RSS node indicates a smaller weight of the RSS node. Optionally, some algorithms may alternatively be used for implementation. Examples are not described one by one herein again.

In addition, because load on each RSS node is constantly updated, the weight of each RSS node needs to be updated in time to improve effectiveness of the load balancing strategy. In view of this, in some embodiments, the first RSS node periodically reports the load status data of the first RSS node to the management node, so that the management node determines the weight of the first RSS node based on the load status data of the first RSS node. In other words, the management node periodically updates the weight of the first RSS node.

In addition, when a running process of the target application is not stable enough, it is meaningless to configure a load balancing strategy for each stage based on an estimated shuffle data amount. In this scenario, a user may further configure an initial load balancing strategy for the target application via the metadata service node shown in FIG. 5. Details are not described herein again.

Step 1402: The first RSS node receives at least a part of data in the first shuffle data that is stored by the execution unit according to the first load balancing strategy.

After the execution unit stores the first shuffle data according to the first load balancing strategy, because the first RSS node is a storage node specified in the first load balancing strategy, the first RSS node receives at least a part of data in the first shuffle data.

The first RSS node stores shuffle data each time after receiving the shuffle data.

Step 1403: The first RSS node obtains an extended RSS node in response to load pressure of the first RSS node, so that the execution unit stores second shuffle data according to a second load balancing strategy.

In embodiments of this application, in the running process of the target application, to avoid excessively high load pressure of a single RSS node, after the execution unit stores the first shuffle data into the RSS nodes according to the first load balancing strategy, each RSS node may monitor load pressure of the RSS node, so as to help determine whether the RSS node needs to be extended.

In some embodiments, an implementation of step 1403 may be: When it is detected through monitoring that a total amount of shuffle data stored in the first RSS node exceeds a reference threshold, the first RSS node sends a node extension request message to the management node; when the management node receives the node extension request message from the first RSS node, the management node determines a second RSS node from the plurality of RSS nodes as the extended RSS node, and the management node returns a node extension response message to the first RSS node, where the node extension response message carries an identifier of the extended RSS node; and the first RSS node receives the node extension response message from the management node.

The reference threshold may be preconfigured by an administrator. When the total amount of the shuffle data stored in the first RSS node exceeds the reference threshold, it indicates that remaining storage space of the first RSS node is small. In this case, if a large amount of shuffle data is stored into the first RSS node, it is likely that the first RSS node is overloaded. Therefore, in this scenario, the first RSS node may send the node extension request message to the management node.

In the running process of the target application, the first RSS node may periodically monitor load pressure of the first RSS node based on a preset period. Optionally, in the running process of the target application, the first RSS node may monitor load pressure of the first RSS node once after receiving shuffle data from the execution unit each time.

In addition, an implementation in which the management node determines the second RSS node from the plurality of RSS nodes as the extended RSS node may be: The management node obtains a weight of each RSS node of the plurality of RSS nodes, where the weight indicates a magnitude of load pressure of a corresponding RSS node; and the management node determines the second RSS node from the plurality of RSS nodes based on the weight of each RSS node of the plurality of RSS nodes.

By using the weight, the management node can select an RSS node with light load as the extension node.

For example, in a scenario in which a larger weight indicates a lower load pressure, the management node selects, from the plurality of RSS nodes, a node with a larger weight as the second RSS node.

In addition, when the first RSS node receives the node extension response message from the management node, the first RSS node may further view a quantity of map tasks that are not executed in all map tasks registered with the first RSS node at the current stage, and if the quantity of map tasks that are not executed at the current stage is large, the second RSS node is locally stored as the extended RSS node. Correspondingly, if the quantity of map tasks that are not executed at the current stage is small, the second RSS node is not used as the extended RSS node.

The foregoing implementation is described by using an example in which the management node determines the extended RSS node. Optionally, the extended RSS node may be determined in another manner. For example, the first RSS node may directly interact with other RSS nodes, to determine the extended RSS node via the first RSS node. Details are not described herein again.

Step 1404: The execution unit obtains the extended RSS node of the first RSS node.

In some embodiments, in step 1401, the execution unit sends a data write request message to the first RSS node, where the data write request message indicates to store at least a part of the first shuffle data into the first RSS node. In this scenario, an implementation of step 1404 may be: The first RSS node receives the data write response message from the execution unit, where the data write response message carries the identifier of the extended RSS node.

To be specific, when the first RSS node receives the data write request message from the execution unit, after the first RSS node stores the shuffle data, the first RSS node further checks whether the extended RSS node is configured for the first RSS node. For a specific configuration manner, refer to step 1403. If the extended RSS node is configured, the first RSS node returns, to the execution unit, the data write response message carrying the identifier of the extended RSS node, to notify the execution unit that currently the first RSS node is overloaded, and subsequent shuffle data may be stored into the extended RSS node.

Optionally, in step 1403, when the first RSS node obtains the extended RSS node configured by the management node, the first RSS node may also directly send the identifier of the extended RSS node to the execution unit, instead of sending the identifier of the extended RSS node only after receiving the data write request message from the execution unit.

Step 1405: The execution unit updates the first load balancing strategy based on the extended RSS node of the first RSS node, to obtain the second load balancing strategy.

After obtaining a node extension result, the execution unit updates the first load balancing strategy through step 1405, to obtain the second load balancing strategy.

The execution unit updates the first load balancing strategy based on the extended RSS node of the first RSS node, to obtain the second load balancing strategy. For example, it may be understood that: assuming that the first load balancing strategy indicates to store shuffle data of the first partition and a second partition into the first RSS node, the updated second load balancing strategy indicates storage of the shuffle data of the second partition into the extended RSS node, and storage of the data of the first partition into the first RSS node.

Optionally, it may alternatively be understood that, assuming that the first load balancing strategy indicates storage of the shuffle data of the first partition and the second partition into the first RSS node, the updated second load balancing strategy indicates storage of the shuffle data of the first partition and the second partition into the extended RSS node.

Step 1406: The execution unit stores the second shuffle data according to the second load balancing strategy, where the second shuffle data is shuffle data generated when the target application is executed after the current time.

After the execution unit obtains the updated second load balancing strategy, the execution unit may store, according to the second load balancing strategy, the subsequently generated second shuffle data, to avoid storing the shuffle data according to the first load balancing strategy in the entire running process of the target application. This avoids overload of a single RSS node.

Optionally, in a scenario in which a load balancing strategy is configured for each stage of the target application, step 1401 to step 1406 may be used to update an initially configured load balancing strategy at a middle moment of a stage of the target application, and the execution unit may store, according to the second load balancing strategy, the second shuffle data subsequently generated at the stage, to avoid storing the shuffle data according to the first load balancing strategy in the entire stage, and further avoid overload of a single RSS node.

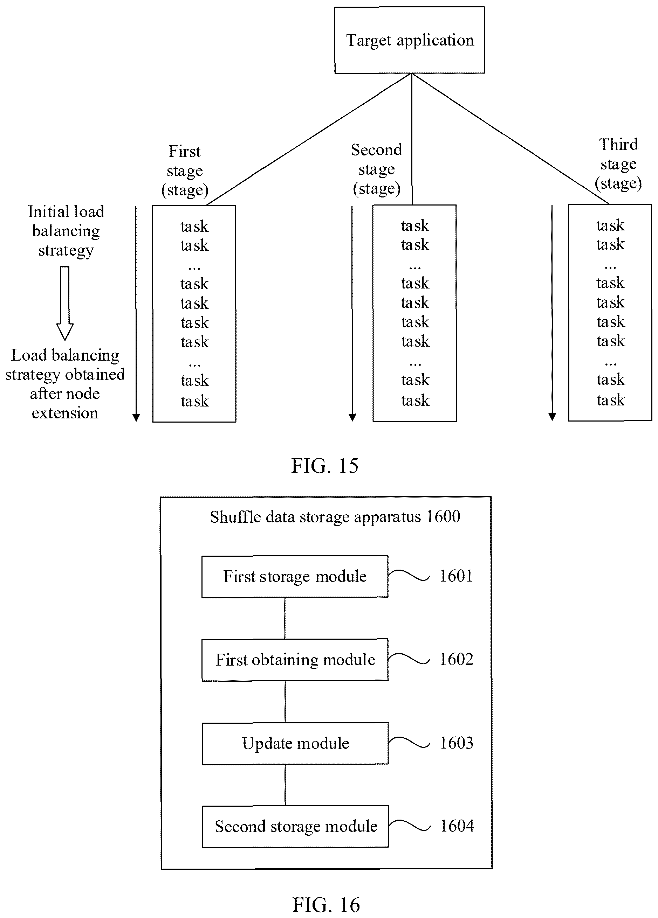

FIG. 15 is a diagram of updating a load balancing strategy according to an embodiment of this application. As shown in FIG. 15, it is assumed that a running process of a target application includes three stages, which are respectively referred to as a first stage, a second stage, and a third stage, and an initial load balancing strategy is configured for each of the three stages of the target application. Each stage includes a large number of map tasks (tasks). For any stage like the first stage, shuffle data is generated by a map task in an early phase of the first stage, and the execution unit stores the shuffle data into each RSS node according to initial load balancing. As an amount of shuffle data stored into each RSS node increases, load pressure of each RSS node increases. When load pressure of an RSS node is excessively high, an extended RSS node may be configured for the RSS node. In this way, the execution unit may update the initial load balancing strategy for the first stage, to transfer, to the extended RSS node, shuffle data that is generated in a subsequent map task at the first stage and that needs to be stored into the RSS node.

In conclusion, in embodiments of this application, in the running process of the target application, the execution unit may obtain an extended RSS node for an RSS node, to update a load balancing strategy, so as to avoid storing shuffle data according to a same load balancing strategy in the entire running process of the target application. This can avoid excessively high load pressure of a single RSS node.

In addition, when the target application is registered, different load balancing strategies may be configured for different stages of the target application, to avoid excessively high load pressure of a single RSS node. Therefore, embodiments of this application provide a solution for statically configuring a load balancing strategy at a stage (stage) level. Different load balancing strategies configured for different stages of the target application may be configured based on an estimated shuffle data amount for each stage. This can further avoid excessively scattered distribution of shuffle data of a large quantity of partitions with small data amounts.

In addition, for a stage of the target application, an extended RSS node may be obtained after a map task in response to load pressure of the RSS node, to update a load balancing strategy, and the shuffle data is stored by using an updated load balancing strategy starting from a next map task after the map task. In other words, embodiments of this application provide a solution for dynamically responding a load balancing strategy at a task (task) level.

In conclusion, in embodiments of this application, in a running process of the target application, the execution unit may obtain an extended RSS node for an RSS node, to update a load balancing strategy, so as to avoid storing shuffle data according to a same load balancing strategy in the entire running process of the target application. This can avoid excessively high load pressure of a single RSS node.

FIG. 16 is a diagram of a structure of a shuffle data storage apparatus according to an embodiment of this application. The apparatus is deployed in an execution unit. As shown in FIG. 16, the apparatus 1600 includes the following modules.

A first storage module 1601 is configured to store first shuffle data into at least one remote shuffle service RSS node according to a first load balancing strategy, where the first shuffle data is shuffle data generated when a target application is executed at a current time, and the at least one RSS node includes a first RSS node. For a specific implementation, refer to step 1401 in the embodiment in FIG. 14.

A first obtaining module 1602 is configured to obtain an extended RSS node of the first RSS node. For a specific implementation, refer to step 1404 in the embodiment in FIG. 14.

An update module 1603 is configured to update the first load balancing strategy based on the extended RSS node of the first RSS node, to obtain a second load balancing strategy. For a specific implementation, refer to step 1405 in the embodiment in FIG. 14.

A second storage module 1604 is configured to store second shuffle data according to the second load balancing strategy, where the second shuffle data is shuffle data generated when the target application is executed after the current time. For a specific implementation, refer to step 1406 in the embodiment in FIG. 14.

Optionally, the first shuffle data is shuffle data generated when the execution unit executes a first map task at a target stage of the target application, and the target stage is any stage of a plurality of stages corresponding to the target application; and the second shuffle data is shuffle data generated when the execution unit executes a second map task at the target stage of the target application, and the second map task is a map task executed after the first map task.

Optionally, the apparatus further includes: a second obtaining module, configured to obtain a load balancing strategy set, where the load balancing strategy set includes a plurality of load balancing strategies that are in a one-to-one correspondence with the plurality of stages, and first load balancing strategy is a load balancing strategy that is in the load balancing strategy set and that corresponds to target stage; and a third storage module, configured to store the load balancing strategy set.

Optionally, the second obtaining module is configured to receive, by the execution unit, the load balancing strategy set from a drive unit.

Optionally, the first storage module is configured to send a data write request message to the first RSS node, where the data write request message indicates to store a part of data in the first shuffle data into the first RSS node; and the first obtaining module is configured to receive a data write response message from the first RSS node, where the data write response message carries an identifier of the extended RSS node.

In conclusion, in embodiments of this application, in a running process of the target application, the execution unit may obtain an extended RSS node for an RSS node, to update a load balancing strategy, so as to avoid storing shuffle data according to a same load balancing strategy in the entire running process of the target application. This can avoid excessively high load pressure of a single RSS node.

It should be noted that shuffle data storage of the shuffle data storage apparatuses according to the foregoing embodiments store is described by using only division into the foregoing functional modules as an example. During actual application, the foregoing functions can be allocated to different functional modules for implementation based on a requirement. That is, an internal structure of the device is divided into different functional modules to implement all or some of the functions described above. In addition, the shuffle data storage apparatuses according to the foregoing embodiments and the shuffle data storage method embodiments pertain to a same concept. For a specific implementation process of the apparatuses, refer to the method embodiments. Details are not described herein again.

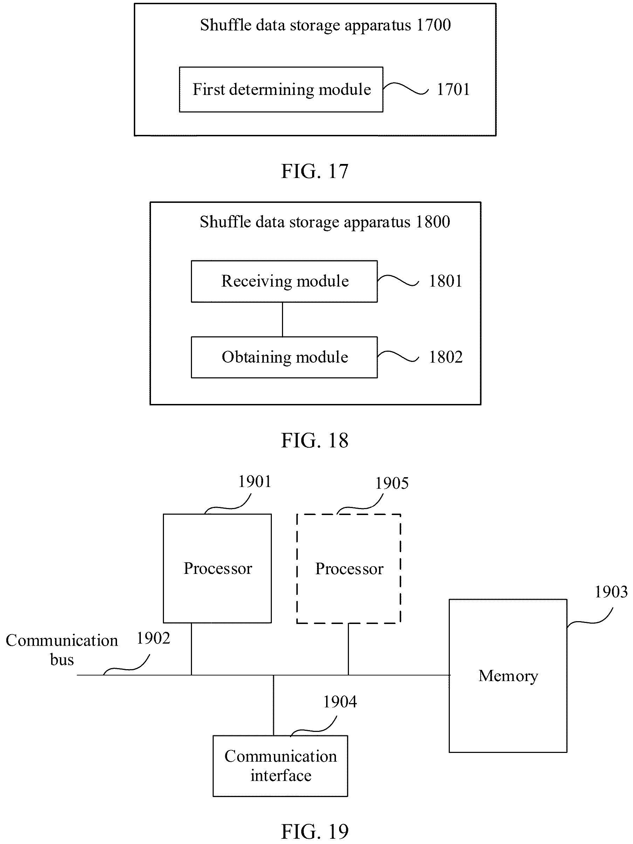

FIG. 17 is a diagram of a structure of another shuffle data storage apparatus according to an embodiment of this application. The apparatus is deployed on a management node. As shown in FIG. 17, the apparatus 1700 includes the following modules.

A first determining module 1701, configured to: in a process in which an execution unit stores first shuffle data into at least one remote shuffle service RSS node according to a first load balancing strategy, determine, in response to load pressure of a first RSS node in the at least one RSS node, a second RSS node from a plurality of RSS nodes as an extended RSS node of the first RSS node, so that the execution unit stores second shuffle data according to a second load balancing strategy. For a specific implementation, refer to step 1403 in the embodiment in FIG. 14.

The first shuffle data is shuffle data generated when the execution unit executes a target application at a current time, the second shuffle data is shuffle data generated when the execution unit executes the target application after the current time, and the second load balancing strategy is obtained by updating the first load balancing strategy based on the second RSS node.

Optionally, the first determining module is configured to: when receiving a node extension request message from the first RSS node, perform an operation of determining the second RSS node from the plurality of RSS nodes, where the node extension request message indicates that a total amount of shuffle data stored in the first RSS node exceeds a reference threshold.

The apparatus further includes: a first sending module, configured to return a node extension response message to the first RSS node, where the node extension response message carries an identifier of the second RSS node.

Optionally, the first determining module is configured to: obtain a weight of each RSS node of the plurality of RSS nodes, where the weight indicates a magnitude of load pressure of a corresponding RSS node; and determine the second RSS node from the plurality of RSS nodes based on the weight of each RSS node of the plurality of RSS nodes.

Optionally, the apparatus further includes: a receiving module, configured to receive load status data from each RSS node of the plurality of RSS nodes, where the load status data indicates a load status of a corresponding RSS node; and a second determining module, configured to determine the weight of each RSS node of the plurality of RSS nodes based on the load status data of each RSS node of the plurality of RSS nodes.

Optionally, the first shuffle data is shuffle data generated when the execution unit executes a first map task at a target stage of the target application, and the target stage is any stage of a plurality of stages corresponding to the target application; and the second shuffle data is shuffle data generated when the execution unit executes a second map task at the target stage of the target application, and the second map task is a map task executed after the first map task.

Optionally, the apparatus further includes: a third determining module, configured to determine a load balancing strategy set, where the load balancing strategy set includes a plurality of load balancing strategies that are in a one-to-one correspondence with the plurality of stages of the target application, and the first load balancing strategy is a load balancing strategy that is in the load balancing strategy set and that corresponds to the target stage.

Optionally, the third determining module is configured to: when receiving an application registration request from a drive unit, perform an operation of determining the load balancing strategy set, where the application registration request carries an identifier of the target application; and the apparatus further includes a second sending module, configured to return the load balancing strategy set to the drive unit.

Optionally, the third determining module is configured to: determine an estimated shuffle data amount at each stage of the plurality of stages; and determine the load balancing strategy set based on the estimated shuffle data amount at each stage of the plurality of stages and the weight of each RSS node of the plurality of RSS nodes, where there is a positive correlation between the estimated shuffle amount at each stage and a quantity of RSS node identifiers included in a load balancing strategy corresponding to each stage.

Optionally, the third determining module is configured to: query a shuffle data history record corresponding to the target application; and if the shuffle data history record is found, determine an estimated shuffle data amount of each of the plurality of stages based on the shuffle data history record.

Optionally, the third determining module is configured to: if no history record of the shuffle data is found, obtain a shuffle data sampling result corresponding to the target application; and determine the estimated shuffle data amount at each stage of the plurality of stages based on the shuffle data sampling result.

In embodiments of this application, when the execution unit stores shuffle data generated in the running process of the target application, the management node may determine an extended RSS node for an RSS node in response to load pressure of the RSS node in an initial load balancing strategy, to avoid storing shuffle data according to a same load balancing strategy in the entire running process of the target application. This can avoid excessively high load pressure of a single RSS node.

It should be noted that shuffle data storage of the shuffle data storage apparatuses according to the foregoing embodiments store is described by using only division into the foregoing functional modules as an example. During actual application, the foregoing functions can be allocated to different functional modules for implementation based on a requirement. That is, an internal structure of the device is divided into different functional modules to implement all or some of the functions described above. In addition, the shuffle data storage apparatuses according to the foregoing embodiments and the shuffle data storage method embodiments pertain to a same concept. For a specific implementation process of the apparatuses, refer to the method embodiments. Details are not described herein again.

FIG. 18 is a diagram of a structure of another shuffle data storage apparatus according to an embodiment of this application. The apparatus is deployed on a first RSS node. As shown in FIG. 18, the apparatus 1800 includes the following modules.

A receiving module 1801 is configured to receive at least a part of data in first shuffle data that is stored by an execution unit according to a first load balancing strategy, where the first shuffle data is shuffle data generated when the execution unit executes a target application at a current time. For a specific implementation, refer to step 1402 in the embodiment in FIG. 14.

An obtaining module 1802 is configured to obtain an extended RSS node in response to load pressure of the first RSS node, so that the execution unit stores second shuffle data according to a second load balancing strategy, where the second shuffle data is shuffle data generated when the execution unit executes the target application after the current time. For a specific implementation, refer to step 1403 in the embodiment in FIG. 14.

The second load balancing strategy is obtained by updating the first load balancing strategy based on the extended RSS node.

Optionally, the obtaining module is configured to: send a node extension request message to a management node when it is detected through monitoring that a total amount of shuffle data stored in the first RSS node exceeds a reference threshold; and receive a node extension response message from the management node, where the node extension response message carries an identifier of the extended RSS node.

Optionally, the receiving module is configured to: receive a data write request message from the execution unit, where the data write request message indicates to store a part of data in the first shuffle data into the first RSS node; and the apparatus further includes: a first sending module, configured to send a data write response message to the execution unit, where the data write response message carries an identifier of the extended RSS node.

Optionally, the apparatus further includes: a second sending module, configured to periodically report load status data of the first RSS node to the management node.

In embodiments of this application, when the execution unit stores shuffle data generated in a running process of the target application, each RSS node may determine, based on load pressure of the RSS node, whether to obtain an extended RSS node for the RSS node, so that the execution unit can obtain the extended RSS node for the RSS node in the running process of the target application, to update a load balancing strategy, so as to avoid storing shuffle data according to a same load balancing strategy in the entire running process of the target application. This can avoid excessively high load pressure of a single RSS node.

It should be noted that shuffle data storage of the shuffle data storage apparatuses according to the foregoing embodiments store is described by using only division into the foregoing functional modules as an example. During actual application, the foregoing functions can be allocated to different functional modules for implementation based on a requirement. That is, an internal structure of the device is divided into different functional modules to implement all or some of the functions described above. In addition, the shuffle data storage apparatuses according to the foregoing embodiments and the shuffle data storage method embodiments pertain to a same concept. For a specific implementation process of the apparatuses, refer to the method embodiments. Details are not described herein again.

FIG. 19 is a diagram of a structure of a computer device according to an embodiment of this application. The computing node, the RSS node, or the management node in the foregoing embodiments may be implemented by using the computer device shown in FIG. 19. Refer to FIG. 19. The computer device includes a processor 1901, a communication bus 1902, a memory 1903, and at least one communication interface 1904.

The processor 1901 may be a general-purpose central processing unit (central processing unit, CPU), an application-specific integrated circuit (application-specific integrated circuit, ASIC), or one or more integrated circuits configured to control program execution of solutions of this application.

The communication bus 1902 is configured to transfer information between the foregoing components.

The memory 1903 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only Memory, CD-ROM) or another compact disc storage, an optical disc storage (including a compact disc, a laser disc, an optical disc, a digital versatile disc, a Bluray disc, or the like), a magnetic disk or another magnetic storage device, or any other medium that can be configured to carry or store expected program code in a form of an instruction or a data structure and that can be accessed by a computer, but is not limited thereto. The memory 1903 may exist independently, and be connected to the processor 1901 through the communication bus 1902. The memory 1903 may be integrated with the processor 1901.

The memory 1903 is configured to store program code for performing the solutions of this application, and execution is controlled by the processor 1901. The processor 1901 is configured to execute the program code stored in the memory 1903. The program code may include one or more software modules. The computing node, the RSS node, or the management node in the foregoing embodiments may determine, via the processor 1901 and the one or more software modules in the program code in the memory 1903, data used for developing an application.

The communication interface 1904 uses any apparatus like a transceiver, and is configured to communicate with another device or a communication network. The communication network may be an Ethernet, a radio access network (radio access network, RAN), a wireless local area network (wireless local area network, WLAN), or the like.

**In** a specific implementation, in an embodiment, the computer device may include a plurality of processors, for example, the processor 1901 and a processor 1905 shown in FIG. 19. Each of these processors may be a single-core (single-CPU) processor, or may be a multi-core (multi-CPU) processor. The processor herein may be one or more devices, circuits, and/or processing cores configured to process data (for example, computer program instructions).

The computer device may be a general-purpose computer device or a dedicated computer device. In a specific implementation, the computer device may be a desktop computer, a portable computer, a network server, a personal digital assistant (personal digital assistant, PDA), a mobile phone, a tablet, a wireless terminal device, a communication device, or an embedded device. A type of the computer device is not limited in embodiments of this application.

All or some of the foregoing embodiments may be implemented by software, hardware, firmware, or any combination thereof. When the software is used to implement the foregoing embodiments, all or some of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semiconductive medium (for example, a solid state disk (solid state disk, SSD)).

A person of ordinary skill in the art may understand that all or some of steps of embodiments may be implemented by hardware or a program instructing related hardware. The program may be stored in a computer-readable storage medium. The storage medium may be a read-only memory, a magnetic disk, a compact disc, or the like.

The foregoing descriptions are embodiments provided in this application, but are not intended to limit embodiments of this application. Any modification, equivalent replacement, or improvement made without departing from the spirit and principle of embodiments of this application shall fall within the protection scope of embodiments of this application.

## Claims

1. A shuffle data storage method, wherein the method comprises:
storing, by an execution unit, first shuffle data into at least one remote shuffle service RSS node according to a first load balancing strategy, wherein the first shuffle data is shuffle data generated when a target application is executed at a current time, and the at least one RSS node comprises a first RSS node;
obtaining, by the execution unit, an extended RSS node of the first RSS node;
updating, by the execution unit, the first load balancing strategy based on the extended RSS node of the first RSS node, to obtain a second load balancing strategy; and
storing, by the execution unit, second shuffle data according to the second load balancing strategy, wherein the second shuffle data is shuffle data generated when the target application is executed after the current time.

2. The method according to claim 1, wherein
the first shuffle data is shuffle data generated when the execution unit executes a first map task at a target stage of the target application, and the target stage is any stage of a plurality of stages corresponding to the target application; and
the second shuffle data is shuffle data generated when the execution unit executes a second map task at the target stage of the target application, and the second map task is a map task executed after the first map task.

3. The method according to claim 2, wherein the method further comprises:
obtaining, by the execution unit, a load balancing strategy set, wherein the load balancing strategy set comprises a plurality of load balancing strategies that are in a one-to-one correspondence with the plurality of stages, and the first load balancing strategy is a load balancing strategy that is in the load balancing strategy set and that corresponds to the target stage; and
storing, by the execution unit, the load balancing strategy set.

4. The method according to claim 3, wherein obtaining, by the execution unit, the load balancing strategy set comprises:
receiving, by the execution unit, the load balancing strategy set from a drive unit.

5. The method according to any one of claims 1 to 4, wherein storing, by the execution unit, the first shuffle data into the at least one remote shuffle service RSS node according to the first load balancing strategy comprises:
sending, by the execution unit, a data write request message to the first RSS node, wherein the data write request message indicates to store a part of data in the first shuffle data into the first RSS node; and
obtaining, by the execution unit, the extended RSS node of the first RSS node comprises:
receiving, by the execution unit, a data write response message from the first RSS node, wherein the data write response message carries an identifier of the extended RSS node.

6. A shuffle data storage method, wherein the method comprises:
in a process in which an execution unit stores first shuffle data into at least one remote shuffle service RSS node according to a first load balancing strategy, determining, by a management node in response to load pressure of a first RSS node in the at least one RSS node, a second RSS node from a plurality of RSS nodes as an extended RSS node of the first RSS node, so that the execution unit stores second shuffle data according to a second load balancing strategy, wherein
the first shuffle data is shuffle data generated when the execution unit executes a target application at a current time, the second shuffle data is shuffle data generated when the execution unit executes the target application after the current time, and the second load balancing strategy is obtained by updating the first load balancing strategy based on the second RSS node.

7. The method according to claim 6, wherein determining, by the management node in response to the load pressure of the first RSS node, the second RSS node from the plurality of RSS nodes as the extended RSS node of the first RSS node comprises:
when the management node receives a node extension request message from the first RSS node, performing, by the management node, an operation of determining the second RSS node from the plurality of RSS nodes, wherein the node extension request message indicates that a total amount of shuffle data stored in the first RSS node exceeds a reference threshold; and
the method further comprises:
returning, by the management node, a node extension response message to the first RSS node, wherein the node extension response message carries an identifier of the second RSS node.

8. The method according to claim 6, wherein determining, by the management node, the second RSS node from the plurality of RSS nodes as the extended RSS node of the first RSS node comprises:
obtaining, by the management node, a weight of each RSS node of the plurality of RSS nodes, wherein the weight indicates a magnitude of load pressure of a corresponding RSS node; and
determining, by the management node, the second RSS node from the plurality of RSS nodes based on the weight of each RSS node of the plurality of RSS nodes.

9. The method according to claim 8, wherein before obtaining, by the management node, the weight of each RSS node of the plurality of RSS nodes, the method further comprises:
receiving, by the management node, load status data from each RSS node of the plurality of RSS nodes, wherein the load status data indicates a load status of a corresponding RSS node; and
determining, by the management node, the weight of each RSS node of the plurality of RSS nodes based on the load status data of each RSS node of the plurality of RSS nodes.

10. The method according to any one of claims 6 to 9, wherein
the first shuffle data is shuffle data generated when the execution unit executes a first map task at a target stage of the target application, and the target stage is any stage of a plurality of stages corresponding to the target application; and
the second shuffle data is shuffle data generated when the execution unit executes a second map task at the target stage of the target application, and the second map task is a map task executed after the first map task.

11. The method according to claim 10, wherein the method further comprises:
determining, by the management node, a load balancing strategy set, wherein the load balancing strategy set comprises a plurality of load balancing strategies that are in a one-to-one correspondence with the plurality of stages of the target application, and the first load balancing strategy is a load balancing strategy that is in the load balancing strategy set and that corresponds to the target stage.

12. The method according to claim 11, wherein determining, by the management node, the load balancing strategy set comprises:
when the management node receives an application registration request from a drive unit, performing, by the management node, an operation of determining the load balancing strategy set, wherein the application registration request carries an identifier of the target application; and
the method further comprises:
returning, by the management node, the load balancing strategy set to the drive unit.

13. The method according to claim 11, wherein determining, by the management node, the load balancing strategy set comprises:
determining, by the management node, an estimated shuffle data amount at each stage of the plurality of stages; and
determining, by the management node, the load balancing strategy set based on the estimated shuffle data amount at each stage of the plurality of stages and the weight of each RSS node of the plurality of RSS nodes, wherein
there is a positive correlation between the estimated shuffle data amount at each stage and a quantity of RSS node identifiers comprised in a load balancing strategy corresponding to each stage.

14. The method according to claim 13, wherein determining, by the management node, the estimated shuffle data amount at each stage of the plurality of stages comprises:
querying, by the management node, a shuffle data history record corresponding to the target application; and
if the management node finds the shuffle data history record, determining the estimated shuffle data amount at each stage of the plurality of stages based on the shuffle data history record.

15. The method according to claim 14, wherein after querying, by the management node, the shuffle data history record corresponding to the target application, the method further comprises:
if the management node finds no shuffle data history record, obtaining a shuffle data sampling result corresponding to the target application; and
determining, by the management node, the estimated shuffle data amount at each stage of the plurality of stages based on the shuffle data sampling result.

16. A shuffle data storage method, wherein the method comprises:
receiving, by a first RSS node, at least a part of data in first shuffle data that is stored by an execution unit according to a first load balancing strategy, wherein the first shuffle data is shuffle data generated when the execution unit executes a target application at a current time; and
obtaining, by the first RSS node, an extended RSS node in response to load pressure of the first RSS node, so that the execution unit stores second shuffle data according to a second load balancing strategy, wherein the second shuffle data is shuffle data generated when the execution unit executes the target application after the current time, wherein
the second load balancing strategy is obtained by updating the first load balancing strategy based on the extended RSS node.

17. The method according to claim 16, wherein obtaining, by the first RSS node, the extended RSS node in response to the load pressure of the first RSS node comprises:
sending, by the first RSS node, a node extension request message to a management node when it is detected through monitoring that a total amount of shuffle data stored in the first RSS node exceeds a reference threshold; and
receiving, by the first RSS node, a node extension response message from the management node, wherein the node extension response message carries an identifier of the extended RSS node.

18. The method according to claim 16, wherein receiving, by the first RSS node, at least the part of data in the first shuffle data that is stored by the execution unit according to the first load balancing strategy comprises:
receiving, by the first RSS node, a data write request message from the execution unit, wherein the data write request message indicates to store a part of data in the first shuffle data into the first RSS node; and
after obtaining, by the first RSS node, the extended RSS node, the method further comprises:
sending, by the first RSS node, a data write response message to the execution unit, wherein the data write response message carries an identifier of the extended RSS node.

19. The method according to any one of claims 16 to 18, wherein the method further comprises:
periodically reporting, by the first RSS node, load status data of the first RSS node to the management node.

20. A shuffle data storage apparatus, wherein the apparatus is deployed in an execution unit, and the apparatus comprises:
a first storage module, configured to store first shuffle data into at least one remote shuffle service RSS node according to a first load balancing strategy, wherein the first shuffle data is shuffle data generated when a target application is executed at a current time, and the at least one RSS node comprises a first RSS node;
a first obtaining module, configured to obtain an extended RSS node of the first RSS node;
an update module, configured to update the first load balancing strategy based on the extended RSS node of the first RSS node, to obtain a second load balancing strategy; and
a second storage module, configured to store second shuffle data according to the second load balancing strategy, wherein the second shuffle data is shuffle data generated when the target application is executed after the current time.

21. The apparatus according to claim 20, wherein
the first shuffle data is shuffle data generated when the execution unit executes a first map task at a target stage of the target application, and the target stage is any stage of a plurality of stages corresponding to the target application; and
the second shuffle data is shuffle data generated when the execution unit executes a second map task at the target stage of the target application, and the second map task is a map task executed after the first map task.

22. The apparatus according to claim 21, wherein the apparatus further comprises:
a second obtaining module, configured to obtain a load balancing strategy set, wherein the load balancing strategy set comprises a plurality of load balancing strategies that are in a one-to-one correspondence with the plurality of stages, and the first load balancing strategy is a load balancing strategy that is in the load balancing strategy set and that corresponds to the target stage; and
a third storage module, configured to store the load balancing strategy set.

23. The apparatus according to claim 22, wherein the second obtaining module is configured to:
receive, by the execution unit, the load balancing strategy set from a drive unit.

24. The apparatus according to any one of claims 20 to 23, wherein the first storage module is configured to:
send a data write request message to the first RSS node, wherein the data write request message indicates to store a part of data in the first shuffle data into the first RSS node; and
the first obtaining module is configured to:
receive a data write response message from the first RSS node, wherein the data write response message carries an identifier of the extended RSS node.

25. A shuffle data storage apparatus, wherein the apparatus is deployed on a management node, and the apparatus comprises:
a first determining module, configured to: in a process in which an execution unit stores first shuffle data into at least one remote shuffle service RSS node according to a first load balancing strategy, determine, in response to load pressure of a first RSS node in the at least one RSS node, a second RSS node from a plurality of RSS nodes as an extended RSS node of the first RSS node, so that the execution unit stores second shuffle data according to a second load balancing strategy, wherein
the first shuffle data is shuffle data generated when the execution unit executes a target application at a current time, the second shuffle data is shuffle data generated when the execution unit executes the target application after the current time, and the second load balancing strategy is obtained by updating the first load balancing strategy based on the second RSS node.

26. The apparatus according to claim 25, wherein the first determining module is configured to:
when receiving a node extension request message from the first RSS node, perform an operation of determining the second RSS node from the plurality of RSS nodes, wherein the node extension request message indicates that a total amount of shuffle data stored in the first RSS node exceeds a reference threshold; and
the apparatus further comprises:
a first sending module, configured to return a node extension response message to the first RSS node, wherein the node extension response message carries an identifier of the second RSS node.

27. The apparatus according to claim 25, wherein the first determining module is configured to:
obtain a weight of each RSS node of the plurality of RSS nodes, wherein the weight indicates a magnitude of load pressure of a corresponding RSS node; and
determine the second RSS node from the plurality of RSS nodes based on the weight of each RSS node of the plurality of RSS nodes.

28. The apparatus according to claim 27, wherein the apparatus further comprises:
a receiving module, configured to receive load status data from each RSS node of the plurality of RSS nodes, wherein the load status data indicates a load status of a corresponding RSS node; and
a second determining module, configured to determine the weight of each RSS node of the plurality of RSS nodes based on the load status data of each RSS node of the plurality of RSS nodes.

29. The apparatus according to any one of claims 25 to 28, wherein
the first shuffle data is shuffle data generated when the execution unit executes a first map task at a target stage of the target application, and the target stage is any stage of a plurality of stages corresponding to the target application; and
the second shuffle data is shuffle data generated when the execution unit executes a second map task at the target stage of the target application, and the second map task is a map task executed after the first map task.

30. The apparatus according to claim 29, wherein the apparatus further comprises:
a third determining module, configured to determine a load balancing strategy set, wherein the load balancing strategy set comprises a plurality of load balancing strategies that are in a one-to-one correspondence with the plurality of stages of the target application, and the first load balancing strategy is a load balancing strategy that is in the load balancing strategy set and that corresponds to the target stage.

31. The apparatus according to claim 30, wherein the third determining module is configured to:
when receiving an application registration request from a drive unit, perform an operation of determining the load balancing strategy set, wherein the application registration request carries an identifier of the target application; and
the apparatus further comprises:
a second sending module, configured to return the load balancing strategy set to the drive unit.

32. The apparatus according to claim 30, wherein the third determining module is configured to:
determine an estimated shuffle data amount at each stage of the plurality of stages; and
determine the load balancing strategy set based on the estimated shuffle data amount at each stage of the plurality of stages and the weight of each RSS node of the plurality of RSS nodes, wherein
there is a positive correlation between the estimated shuffle amount at each stage and a quantity of RSS node identifiers comprised in a load balancing strategy corresponding to each stage.

33. The apparatus according to claim 32, wherein the third determining module is configured to:
query, a shuffle data history record corresponding to the target application; and
if the shuffle data history record is found, determine the estimated shuffle data amount at each stage of the plurality of stages based on the shuffle data history record.

34. The apparatus according to claim 33, wherein the third determining module is configured to:
if no shuffle data history record is found, obtain a shuffle data sampling result corresponding to the target application; and
determine the estimated shuffle data amount at each stage of the plurality of stages based on the shuffle data sampling result.

35. A shuffle data storage apparatus, wherein the apparatus is deployed on a first RSS node, and the apparatus comprises:
a receiving module, configured to receive at least a part of data in first shuffle data that is stored by an execution unit according to a first load balancing strategy, wherein the first shuffle data is shuffle data generated when the execution unit executes a target application at a current time; and
an obtaining module, configured to obtain an extended RSS node in response to load pressure of the first RSS node, so that the execution unit stores second shuffle data according to a second load balancing strategy, wherein the second shuffle data is shuffle data generated when the execution unit executes the target application after the current time, wherein
the second load balancing strategy is obtained by updating the first load balancing strategy based on the extended RSS node.

36. The apparatus according to claim 35, wherein the obtaining module is configured to:
send a node extension request message to a management node when it is detected through monitoring that a total amount of shuffle data stored in the first RSS node exceeds a reference threshold; and
receive a node extension response message from the management node, wherein the node extension response message carries an identifier of the extended RSS node.

37. The apparatus according to claim 35, wherein the receiving module is configured to:
receive a data write request message from the execution unit, wherein the data write request message indicates to store a part of data in the first shuffle data into the first RSS node; and
the apparatus further comprises:
a first sending module, configured to send a data write response message to the execution unit, wherein the data write response message carries an identifier of the extended RSS node.

38. The apparatus according to any one of claims 35 to 37, wherein the apparatus further comprises:
a second sending module, configured to periodically report load status data of the first RSS node to the management node.

39. A shuffle data storage apparatus, wherein the apparatus comprises a memory and a processor, wherein
the memory is configured to: store a program that supports the apparatus in performing the method according to any one of claims 1 to 5, and store data for implementing the method according to any one of claims 1 to 5; and
the processor is configured to execute the program stored in the memory.

40. A shuffle data storage apparatus, wherein the apparatus comprises a memory and a processor, wherein
the memory is configured to: store a program that supports the apparatus in performing the method according to any one of claims 6 to 15, and store data for implementing the method according to any one of claims 6 to 15; and
the processor is configured to execute the program stored in the memory.

41. A shuffle data storage apparatus, wherein the apparatus comprises a memory and a processor, wherein
the memory is configured to: store a program that supports the apparatus in performing the method according to any one of claims 16 to 19, and store data for implementing the method according to any one of claims 16 to 19; and
the processor is configured to execute the program stored in the memory.

42. A computer-readable storage medium, wherein the computer-readable storage medium stores instructions; and when the instructions are run on a computer, the computer is enabled to perform the method according to any one of claims 1 to 5, or the method according to any one of claims 6 to 15, or the method according to any one of claims 16 to 19.
